# FASCICULE DE BREVET EUROPEEN

(11) **EP 1 467 901 B1**
(45) Date de publication et mention de la délivrance du brevet: **21.12.2005**
(21) Numéro de dépôt: 03715027.3
(22) Date de dépôt: 20.01.2003
(51) Int. Cl.: B61L 3/12, G01S 13/91

(54) **SYSTEME DE CONTROLE DE LA CIRCULATION D'UN VEHICULE DE TRANSPORT EN COMMUN SUR UNE VOIE DE GUIDAGE**
SYSTEM ZUR STEUERUNG DES VERKEHRS ÖFFENTLICHER VERKEHRSMITTEL AUF EINER FÜHRUNGSSCHIENE
SYSTEM FOR CONTROLLING PUBLIC TRANSPORT VEHICLE TRAFFIC ON A GUIDE TRACK

(30) Priorité: 21.01.2002 FR 0200711
(43) Date de publication de la demande: 20.10.2004
(73) Titulaire: Regie Autonome des Transports Parisiens RATP, 75599 Paris Cedex 12 (FR)
(72) Inventeur: HENRIQUET, René, F-89110 SAINT-MAURICE LE VIEIL (FR); SAUVAGE, Patrick, F-93270 SEVRAN (FR); BALAY, Claude, F-78400 CHATOU (FR)
(74) Mandataire: Habasque, Etienne J. Jean-François
(86) Numéro de dépôt international: PCT/FR2003/000175
(87) Numéro de publication internationale: WO 2003/066407

(56) Documents cités:
- EP-A- 0 403 954
- CH-A- 635 283
- GB-A- 2 356 277
- US-A- 3 876 171

## Description

La présente invention concerne un système de contrôle de la circulation d'un véhicule de transport en commun, sur une voie de guidage.

On connaît déjà dans l'état de la technique, des systèmes de contrôle de ce type, dans lesquels une ou plusieurs bornes de contrôle de circulation sont associées à la voie, et sont par exemple réparties dans des zones de contrôle de vitesse des véhicules.

Chaque borne de contrôle comporte alors des moyens de détermination de la vitesse du véhicule, des premiers moyens de génération d'un premier champ magnétique constant, formés par exemple par un aimant permanent et des seconds moyens de génération d'un second champ magnétique variable, destiné à être superposé au premier champ et dont le fonctionnement est piloté par des moyens de commande comprenant des moyens de comparaison de la vitesse déterminée du véhicule à un seuil de vitesse prédéterminé, pour ne générer le second champ que si la vitesse du véhicule est inférieure au seuil.

Le véhicule circulant sur la voie est alors quant à lui équipé de moyens de détection de champ magnétique et d'analyse de celui-ci pour déclencher le fonctionnement de moyens de freinage du véhicule si ces moyens reconnaissent dans le champ, le premier champ magnétique et pas le second champ.

Ces systèmes sont donc des systèmes de contrôle ponctuels et autonomes de vitesse.

On conçoit alors que lorsqu'un véhicule passe devant une telle borne, et que la vitesse de celui-ci est supérieure au seuil prédéterminé, seul le premier champ magnétique est engendré, par exemple par l'aimant permanent et est détecté par les moyens de détection et d'analyse correspondants du véhicule, ce qui provoque le déclenchement des moyens de freinage du véhicule.

Par contre, si la vitesse du véhicule est correcte, c'est-à-dire inférieure au seuil prédéterminé, les seconds moyens de génération du second champ magnétique variable sont déclenchés et ce second champ magnétique variable est superposé au premier champ magnétique constant, afin d'être détecté par les moyens de détection et d'analyse correspondants du véhicule, ce qui autorise alors le passage du véhicule sans activer les moyens de freinage de celui-ci.

Dans l'état de la technique, les moyens de détermination de la vitesse du véhicule sont formés par exemple par deux détecteurs électromécaniques, de type pédale, implantés le long de la voie et qui sont déclenchés lors du passage du véhicule par celui-ci.

Ces deux détecteurs permettent alors de mesurer le temps « t » s'écoulant entre le passage du premier essieu du véhicule sur ces deux détecteurs, ce temps étant fonction de la vitesse du véhicule.

Ce temps mesuré « t » est alors comparé dans la borne à un temps minimum appelé « tm » correspondant à la vitesse maximale autorisée sur cette portion de voie.

Si le temps t est inférieur au temps tm, cela signifie que le véhicule circule à une vitesse supérieure à la vitesse maximale autorisée, et le système déclenche alors le freinage du véhicule, selon le processus décrit précédemment, c'est-à-dire en n'émettant pas le second champ magnétique variable.

Dans le cas contraire, le second champ est engendré et le véhicule passe la borne.

Cependant, ce système présente un certain nombre d'inconvénients.

Un autre document de l'état de la technique (GB 2 356 277) décrit un système de repetition de signaux fixes avec deux électroaimants, un fixe et un variable selon l'aspect du signal.

En effet, il nécessite l'implantation sur la voie de deux détecteurs électromécaniques, qui sont d'un montage, d'un entretien et d'un réglage relativement difficiles.

Par ailleurs, les opérations de démontage et de remontage de ceux-ci sont relativement importantes, et posent des problèmes lorsque d'autres travaux sont prévus sur la voie.

De plus, ces systèmes sont relativement fragiles et nécessitent des contrôles fréquents et coûteux de maintenance, qui peuvent également se traduire par un manque de confiance dans l'efficacité et la fiabilité de ces systèmes.

Le but de l'invention est donc de résoudre ces problèmes.

A cet effet, l'invention a pour objet un système de contrôle de la circulation d'un véhicule de transport en commun sur une voie de guidage, du type comportant, associée à la voie, au moins une borne de contrôle comportant :
- des moyens de détermination de la vitesse de ce véhicule ;
- des premiers moyens de génération d'un premier champ magnétique constant ;
- des seconds moyens de génération d'un second champ magnétique variable destiné à être superposé au premier champ, et dont le fonctionnement est piloté par des moyens de commande comprenant des moyens de comparaison de la vitesse déterminée du véhicule à un seuil de vitesse prédéterminée, pour ne générer le second champ que si la vitesse du véhicule est inférieure au seuil, et
- associés au véhicule, des moyens de détection de champ magnétique et d'analyse de celui-ci pour déclencher le fonctionnement de moyens de freinage du véhicule si les moyens d'analyse reconnaissent dans le champ, le premier champ magnétique et pas le second champ magnétique,
caractérisé en ce que les premiers moyens de génération du premier champ magnétique comprennent un électroaimant associé à des moyens de commande de son fonctionnement et en ce que les moyens de détermination de la vitesse du véhicule comprennent un premier radar à effet Doppler.

Selon d'autres caractéristiques :
- chaque borne comporte un second radar à effet Doppler de détection du passage du véhicule sur la borne, associé à des moyens de déclenchement de l'alimentation de l'électroaimant pendant une période de temps prédéterminée correspondant au seuil de vitesse prédéterminée de circulation du véhicule sur la borne ;
- chaque borne comporte une unité de traitement d'informations associée à chaque radar à effet Doppler, elles-mêmes associées à des moyens formant sélecteur de combinaison des signaux de pilotage des premier et second moyens de génération de champ magnétique délivrés par celles-ci ;
- chaque borne comporte des moyens formant superviseur de fonctionnement de différents organes de celle-ci ;
- chaque borne est adaptée pour être raccordée à un réseau informatique de raccordement de celle-ci à un centre de surveillance à distance ;
- plusieurs bornes sont implantées le long de la voie en amont d'une zone de contrôle de vitesse et sont programmées avec des seuils de vitesse maximale autorisée différents ;
- les seconds moyens de génération d'un second champ magnétique variable, comprennent des boucles de fréquence.

L'invention sera mieux comprise à la lecture de la description qui va suivre, donnée uniquement à titre d'exemple et faite en se référant aux dessins annexés, sur lesquels :
- la Fig.1 représente de façon schématique, une portion de voie de circulation de véhicule équipée de bornes entrant dans la constitution d'un système selon l'invention ;
- la Fig.2 illustre le contrôle de vitesse mis en oeuvre ;
- la Fig.3 représente un schéma synoptique général de la structure d'une borne de contrôle entrant dans la constitution d'un système selon l'invention ; et
- la Fig.4 représente un schéma synoptique illustrant la surveillance à distance d'un réseau de voies.

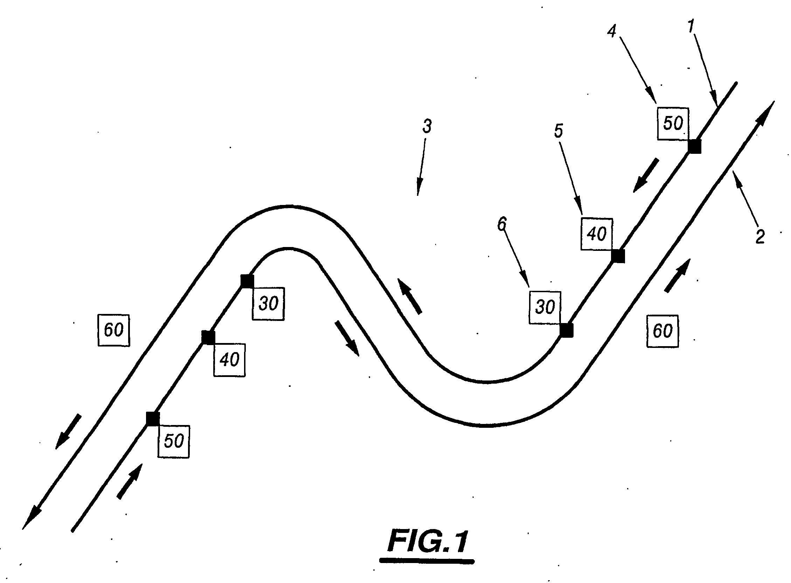

On a illustré sur la figure 1, des voies de guidage et de circulation d'un véhicule de transport en commun guidé, qui sont désignées par les références générales 1 et 2 sur cette figure.

Chaque voie est alors affectée à un sens de la circulation des véhicules et présente par exemple une zone 3 en courbe, dans laquelle la vitesse du véhicule doit être contrôlée.

Des moyens de contrôle de la vitesse du véhicule sont disposés en amont de cette zone et sont par exemple régulièrement répartis le long de la voie.

Dans l'exemple donné, trois bornes de contrôle de la vitesse sont régulièrement réparties le long de la voie 1 en amont de la portion 3.

Ainsi, et alors que la vitesse de circulation normale des véhicules sur le reste de la voie, peut par exemple être égale à 60 km/h, la vitesse du véhicule dans la portion 3 en courbe, peut par exemple être fixée à 30 km/h au maximum.

Trois bornes de contrôle désignées par les références générales 4, 5 et 6, peuvent alors être implantées en amont de cette portion en courbe sur chaque voie, pour contrôler que les véhicules décélèrent correctement avant d'entrer dans cette portion en passant de 60 km/h à 30 km/h.

Les trois bornes peuvent alors être associées chacune à une vitesse de circulation maximale prédéterminée, de 50 km/h pour la première, de 40 km/h pour la deuxième et de 30 km/h pour la troisième, c'est-à-dire celle placée juste avant la portion 3.

Ces différentes bornes sont alors adaptées pour contrôler que le véhicule respecte bien les vitesses préconisées.

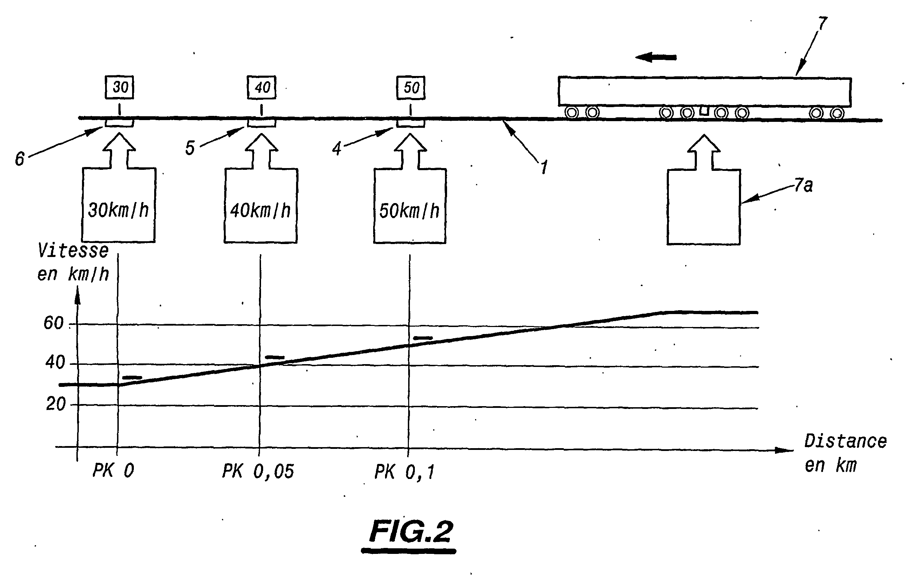

Ces trois bornes 4,5 et 6 sont également visibles sur la figure 2, qui illustre la décélération correspondante du véhicule qui est désigné par la référence générale 7 sur cette figure, lors de son passage devant ces bornes et montre l'enveloppe de décélération de ce véhicule.

Comme cela a été indiqué précédemment, les bornes sont alors implantées le long de la voie et sont adaptées pour coopérer avec des moyens de détection et d'analyse embarqués à bord du véhicule, ces moyens de détection et d'analyse étant désignés par la référence générale 7a sur cette figure.

De façon classique, et comme cela a été décrit précédemment, ces moyens embarqués à bord du véhicule, comprennent des moyens de détection et d'analyse de champ magnétique, qui sont reliés aux moyens de freinage du véhicule et qui sont adaptés pour reconnaître lors du passage du véhicule sur les bornes, dans le champ magnétique engendré par celles-ci, un premier champ magnétique constant et un second champ magnétique variable, superposé à ce premier champ magnétique constant, si la vitesse est correcte, c'est-à-dire inférieure au seuil maximal prédéterminé au niveau de cette borne.

De façon classique également, si les moyens embarqués à bord du véhicule reconnaissent dans le champ magnétique, le premier champ magnétique constant et pas le second champ magnétique variable, ils déclenchent les moyens de freinage du véhicule.

Par contre, si ces moyens d'analyse et de détection reconnaissent dans le champ magnétique, le premier champ magnétique constant et le second champ magnétique variable, le véhicule est autorisé à poursuivre son déplacement.

Ces champs magnétiques sont engendrés par des moyens de génération correspondants, implantés dans chaque borne de contrôle le long de la voie.

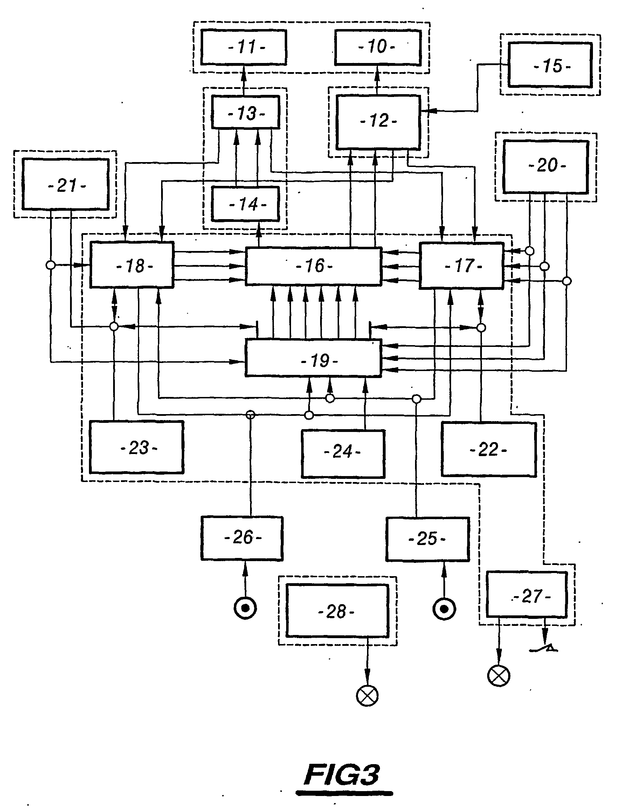

On a illustré sur la figure 3, le schéma synoptique d'un exemple de réalisation d'une telle borne.

Une telle borne est alors munie de moyens formant électroaimant désignés par la référence générale 10 sur cette figure, adaptés pour générer le premier champ magnétique constant et de moyens formant boucles de fréquence désignés par la référence générale 11 adaptés pour générer le second champ magnétique variable.

L'électroaimant et les boucles de fréquence sont associés à des moyens d'amplification correspondants, respectivement 12 et 13. Les moyens d'amplification 13 associés aux boucles de fréquence 11 sont eux-mêmes associés à des moyens formant filtre d'harmonique 14.

Des moyens d'alimentation désignés par la référence générale 15 sont également prévus pour l'électroaimant 10.

Le fonctionnement de ces premier et second moyens de génération de champs est alors piloté par des moyens formant sélecteur, désignés par la référence générale 16 associés à trois unités de traitement d'informations désignées par les références générales 17,18 et 19 respectivement.

L'unité de traitement d'informations 17 est associée à des moyens de mesure de la vitesse du véhicule se rapprochant de la borne, ces moyens étant désignés par la référence générale 20 sur cette figure et comprenant par exemple un radar à effet Doppler fonctionnant par exemple à une fréquence de 24 giga hertz.

Ce radar est alors adapté pour détecter l'arrivée d'un véhicule en rapprochement de la borne correspondante, et pour mesurer sa vitesse.

L'unité de traitement d'informations 18 est quant à elle associée à des moyens de détection du passage du véhicule sur la borne correspondante, ces moyens étant désignés par la référence générale 21 et comprenant également par exemple un radar à effet Doppler, fonctionnant lui à une fréquence différente, comme par exemple 9 giga hertz.

La borne peut également comporter des capteurs de température désignés par les références générales 22 et 23 sur cette figure, pour assurer un contrôle du fonctionnement de celle-ci et un module de liaison désigné par la référence générale 24 comprenant par exemple une liaison de type RS485 dont la fonction sera décrite plus en détail par la suite.

Des modules de capteurs externes désignés par les références générales 25 et 26 peuvent également être raccordés à cette borne et un module d'interface 27 peut également être associé à celle-ci.

Enfin, une alimentation générale 28 est également prévue.

On conçoit alors que chaque borne de contrôle de vitesse met en oeuvre deux chaînes de mesure différentes, afin de limiter au maximum les pannes de mode commun et d'accroître sa sûreté de fonctionnement et d'améliorer son autocontrôle par comparaison de données issues de deux chaînes de mesure, l'une principale et l'autre auxiliaire.

La chaîne principale comporte le radar à effet Doppler 20 transmettant en permanence la vitesse instantanée d'un véhicule détecté à un module de traitement de vitesse formé par exemple par l'unité de traitement d'informations 17.

La chaîne auxiliaire comporte le radar à effet Doppler 21, émettant un signal permettant d'indiquer le passage du véhicule sur la borne à un autre module de traitement formé par l'unité de traitement d'informations 18.

Lorsqu'un véhicule se présente devant une borne, les deux chaînes de mesure sont activées.

Le radar à effet Doppler 20 fournit en temps réel la vitesse du véhicule et cette information est analysée par l'unité de traitement 17, réalisée par exemple à base de microprocesseurs.

Si la vitesse du véhicule est inférieure à la valeur de seuil prédéterminée de vitesse maximale autorisée, telle que programmée au préalable dans celle-ci, l'unité de traitement d'informations 17 déclenche l'émission du champ magnétique constant en pilotant l'alimentation des moyens d'amplification 12 et donc de l'électroaimant 10, et l'émission du champ magnétique variable en déclenchant le fonctionnement des moyens de filtrage 14, des moyens d'amplification 13 et des boucles de fréquence 11.

Parallèlement, et dès que le radar à effet Doppler 21 de détection de présence, détecte le passage du véhicule au-dessus de la borne, la chaîne auxiliaire de cette borne, déclenche également l'alimentation de l'électroaimant 10 pour émettre le premier champ magnétique constant, pendant une période de temps prédéterminée, fonction de la vitesse autorisée au niveau de la borne.

A l'issue de cette période de temps prédéterminée, la commande correspondante de l'alimentation de cet électroaimant par la chaîne auxiliaire, est coupée.

On conçoit que ceci présente un certain nombre d'avantages, notamment au niveau de la sécurité de fonctionnement de la borne en mettant en oeuvre deux chaînes de mesure.

De plus, il est possible de désactiver la borne afin de ne pas déclencher le freinage de tous les véhicules passant sur la borne en cas de défaillance fatale de celle-ci, dans la mesure où il est possible de désactiver la commande d'alimentation de l'électroaimant émettant le premier champ magnétique constant.

Ceci est d'autant plus acceptable que chaque borne dispose d'une architecture redondante et d'un autocontrôle.

De plus, tous les éléments sont intégrés dans la borne qui est conçue de manière à éviter toute dégradation par des pièces traînantes.

La chaîne principale comporte donc le radar 20 à effet Doppler, qui sert à mesurer la vitesse du train afin de la comparer à la vitesse de consigne, qui a été préalablement programmée dans la borne.

Ce radar délivre un certain nombre d'informations parmi lesquelles le sens de déplacement du véhicule pour ne mesurer la vitesse que d'un train se rapprochant de la borne et pas d'un train qui s'en éloigne.

Ce radar est relié à l'unité de traitement d'informations 17 qui permet de comparer la vitesse mesurée du véhicule à la vitesse de consigne préalablement programmée dans la borne, et de gérer les commandes vers les moyens d'amplification décrits précédemment à travers les moyens formant sélecteur 16.

Cette unité peut par exemple être mise en oeuvre par un microcontrôleur de type RISC, qui filtre et compare la vitesse délivrée par le radar 20 sur une liaison série, à la vitesse de consigne.

Cette unité analyse les informations délivrées par le radar et en fonction du mode de fonctionnement sur lequel elle est programmée par les moyens formant superviseur 19, engendre les signaux de commande des moyens d'amplification.

L'alimentation des moyens d'amplification 12 associés à l'électroaimant 10, est assurée par un amplificateur par exemple de 24 V.

L'unité 17 peut également lire sur deux entrées analogiques, la valeur du courant émis par l'amplificateur et suivant la valeur cible demandée, régule ainsi le courant dans l'électroaimant pour compenser la variation de résistance de ce dernier, notamment en fonction de la température.

Cette unité peut également lire sur une entrée analogique, la valeur du courant dans les moyens d'amplification 13.

On conçoit alors que sur ces trois entrées analogiques, cette unité peut ainsi détecter un court-circuit, une coupure ou une panne sur les moyens d'amplification, l'électroaimant et les boucles de fréquence correspondantes.

Cette unité 17 échange également des informations avec des moyens formant superviseur par une liaison de type par exemple 12C.

C'est en effet par cette liaison que des moyens formant superviseur formés par l'unité de traitement d'informations 19 envoient les paramètres de fonctionnement à l'unité de traitement 17. Ces paramètres peuvent être stockés dans une mémoire non volatile interne à celle-ci, ce qui permet à la remise sous tension, suite par exemple à un débranchement accidentel de la borne, à ces différents moyens d'assurer la fonction malgré une panne des moyens formant superviseur.

Les moyens formant superviseur peuvent à travers la liaison I2C lire les registres internes de modes d'erreur et de fonctionnement de cette unité 17, lire les valeurs mesurées sur les entrées analogiques de celle-ci, lire les valeurs de vitesse reçues par celle-ci, pour les comparer avec celles que le radar 20 a envoyé à ces moyens formant superviseur, et donner l'ordre à cette unité de passer en mode actif ou inactif avec par exemple une demande de confirmation au superviseur et donner l'ordre si cette unité 17 est en mode inactif, de commander ou d'éteindre l'un et/ou l'autre des moyens d'amplification.

L'unité 17 peut également lire des entrées extérieures directement et agit en fonction du mode dans lequel elle est programmée.

Dans le mode le plus utilisé, elle sert à commander les moyens d'amplification 12 et 13 si un véhicule est détecté et coupe les moyens d'amplification 13 si le véhicule est en survitesse pour déclencher le fonctionnement des moyens de freinage du véhicule.

Il existe d'autres modes de fonctionnement dont un mode dit transparent dans lequel cette unité ne commande rien, sauf en cas de survitesse d'un véhicule, auquel cas, elle commande le fonctionnement des moyens d'amplification 12.

Les moyens formant sélecteur 16 mélangent quant à eux, les signaux en provenance des unités de traitement d'informations 17 et 18 et sur commande des moyens formant superviseur 19, bloquent par exemple ces signaux en cas de panne.

Ces moyens formant sélecteur 16 peuvent être réalisés en composants discrets et leur fonction première est de réaliser une fonction logique « ou » entre les commandes issues des unités de traitement d'informations 17 et 18, c'est-à-dire des chaînes principale et auxiliaire.

De plus, une commande issue des moyens formant superviseur 19 sur chaque entrée du circuit permet de couper les informations une par une. Ce circuit de commande peut être formé par un transistor qui court-circuite l'entrée au travers d'une résistance et permet donc de couper les commandes des unités de traitement d'informations en cas de panne détectée sur l'un des modules.

La chaîne auxiliaire de chaque borne comporte comme cela a été indiqué précédemment, le radar à effet Doppler désigné par la référence générale 21, qui peut par exemple être placé à l'horizontale sur chaque borne.

Quand un véhicule passe au-dessus de la borne, ce radar détecte un mouvement sur la base d'un changement de hauteur du véhicule au-dessus de la borne.

Lors de la première détection, l'unité de traitement d'informations 18 associée à ce radar, commande le fonctionnement des moyens d'amplification 12 pendant un temps prédéterminé calculé suivant une consigne de survitesse

L'unité de traitement d'informations 18 permet en effet de commander les moyens d'amplification 12, dès la détection du passage du véhicule pendant une durée qui correspond au temps qu'il faut au train pour passer au-dessus de la borne et en particulier le temps qu'il faut pour que l'avant du train et les moyens de détection correspondants 7a embarqués sur celui-ci franchissent la borne.

Les moyens d'amplification 12 sont constitués par exemple de deux circuits protégés qui assurent un redressement du courant afin d'alimenter l'électroaimant correspondant.

La tension de sortie de ces moyens d'amplification peut par exemple être variable entre 0 et 265 volts.

Ces moyens d'amplification sont régulés en courant suivant la valeur cible de courant programmée dans les unités de traitement d'informations 17 et 18.

Lorsque ces unités 17 et 18 commandent simultanément ces moyens d'amplification, la valeur du courant est automatiquement ajustée.

Les moyens d'amplification 13 pilotent les boucles de fréquence et sont formés par exemple de deux filtres d'ordre 4, centrés par exemple sur les fréquences de 15,36 kHz et 25,6 kHz, qui sont respectivement l'harmonique 5 et l'harmonique 3 de la fréquence de commande issue de l'unité de traitement d'informations 17 ou de l'unité de traitement d'informations 18 dans certains modes.

Cette fréquence de commande est par exemple de 76,8 kHz. Ainsi en cas de dérive, panne, etc.. , dans cet exemple, d'autres fréquences ne peuvent pas être engendrées.

Ces moyens d'amplification comprennent également un amplificateur linéaire intégré muni d'un contrôle de fonctionnement.

Des fonctions annexes sont également mises en oeuvre, ces fonctions ne participant pas directement à la fonction principale qui est l'arrêt du train en cas de survitesse.

Les moyens formant superviseur 19 ont pour fonction de surveiller le bon fonctionnement de la borne, de signaler les survitesses, de diagnostiquer les pannes éventuelles et de les signaler, de reconfigurer si possible la borne en cas de pannes multiples ou de l'éteindre, s'ils ont détecté que celle-ci déclenchait l'arrêt de véhicules qui ne sont pas en survitesse, de mémoriser les dernières survitesses et le dernier passage et éventuellement d'indiquer à distance les vitesses de passage des véhicules par exemple à un exploitant du réseau de voies.

Ces moyens formant superviseur sont également associés à une liaison de type RS485 permettant un dialogue et un paramétrage à distance de la borne et à des moyens d'alimentation servant à alimenter celle-ci.

Les capteurs de température 22 et 23 participent au diagnostic du système.

Les modules de capteurs extérieurs tels que 25 et 26, peuvent être utilisés comme des entrées de capteurs, pour fonctionner soit en mode temporisation, soit en mode de mesure de vitesse, mais également comme des entrées de conditions de signalisation permettant de choisir entre deux ou trois vitesses de consigne en fonction de l'état de la signalisation.

Ces modules peuvent alors présenter des entrées isolées galvaniquement.

Lorsqu'aucune tension n'est présente sur ces entrées, elles sont au niveau logique bas. Une tension continue ou alternative, comprise entre 12 ou 24 volts sur ces entrées, correspond à un niveau logique haut et elles peuvent être commandées par une boucle sèche provenant d'un relais de signalisation.

Enfin, le module d'interface 27 combine différents signaux provenant des unités de traitement d'informations 17 et 18, des moyens formant superviseur 19 et des alimentations, et signale un disfonctionnement le cas échéant.

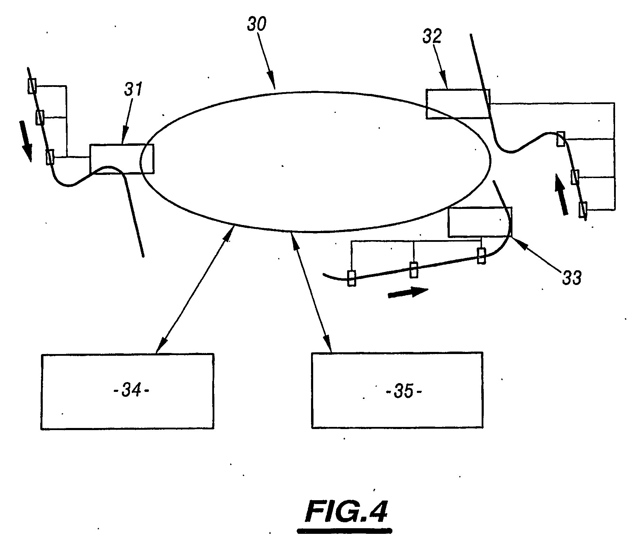

Comme on peut le voir sur la figure 4, ceci permet alors d'utiliser un réseau informatique interne désigné par la référence générale 30 pour raccorder différentes stations d'un réseau telles que les stations 31, 32 et 33, à un centre de maintenance désigné par la référence générale 34 et éventuellement à un poste de commande centralisée désigné par la référence générale 35.

Ces différents éléments permettent alors par exemple d'assurer le contrôle à distance des différentes bornes implantées pour des fonctions de maintenance ou de contrôle de la circulation des véhicules.

On conçoit alors que le système selon l'invention présente un certain nombre d'avantages, dans la mesure où il fonctionne de façon autonome.

Il peut par ailleurs être associé à la voie, de manière très simple, en n'utilisant qu'un seul câble d'alimentation et le cas échéant, un câble de raccordement à un réseau informatique, en utilisant des connecteurs.

Chaque borne est paramétrable et ne nécessite aucun réglage sur site, ce qui est particulièrement intéressant en cas de travaux sur les voies, de modifications de signalisation, etc...

Tous les éléments sont complètement intégrés dans une borne, le module électronique ainsi que l'électroaimant et les boucles de fréquence étant placés dans un même ensemble pouvant se présenter sous la forme d'une boite de taille limitée.

Par ailleurs, le montage et le démontage de chaque borne sont extrêmement simples et celle-ci peut donc être utilisée dans des situations temporaires, telles que par exemple des limitations temporaires de vitesse au niveau de travaux sur la voie, etc..

Le système ne nécessite pas non plus d'intervention sur les installations de signalisation, qui sont en général délicates et coûteuses.

Ce système s'autocontrôle et transmet au service de maintenance, toute détection de défaillance, ce qui permet d'optimiser les opérations de maintenance et améliore la sûreté de fonctionnement de l'ensemble.

Ce système est également évolutif et peut s'interfacer avec d'autres transmissions sol/véhicule, de façon ponctuelle et peut également actionner des indicateurs de danger, tels que des sirènes, des feux, etc..

Enfin, le système selon l'invention est précis et peu coûteux en comparaison avec les systèmes existants.

## Revendications

1. Système de contrôle de la circulation d'un véhicule de transport en commun sur une voie de guidage, du type comportant, associée à la voie (1,2), au moins une borne de contrôle (4,5,6) comportant :
- des moyens (20) de détermination de la vitesse de ce véhicule ;
- des premiers moyens (10) de génération d'un premier champ magnétique constant ;
- des seconds moyens (11) de génération d'un second champ magnétique variable destiné à être superposé au premier champ, et dont le fonctionnement est piloté par des moyens de commande (13,14,16,17,18) comprenant des moyens de comparaison de la vitesse déterminée du véhicule à un seuil de vitesse prédéterminée, pour ne générer le second champ que si la vitesse du véhicule est inférieure au seuil, et
- associés au véhicule (7), des moyens (7a) de détection de champ magnétique et d'analyse de celui-ci pour déclencher le fonctionnement de moyens de freinage du véhicule si les moyens d'analyse reconnaissent dans le champ, le premier champ magnétique et pas le second champ magnétique,
**caractérisé en ce que** les premiers moyens de génération du premier champ magnétique comprennent un électroaimant (10) associé à des moyens de commande de son fonctionnement (12,16,17,18) et **en ce que** les moyens de détermination de la vitesse du véhicule comprennent un premier radar à effet Doppler (20).

2. Système selon la revendication 1, **caractérisé en ce que** chaque borne comporte un second radar à effet Doppler (21) de détection du passage du véhicule sur la borne, associé à des moyens (16,18) de déclenchement de l'alimentation de l'électroaimant (10) pendant une période de temps prédéterminée correspondant au seuil de vitesse prédéterminée de circulation du véhicule sur la borne.

3. Système selon la revendication 2, **caractérisé en ce que** chaque borne comporte une unité de traitement d'informations (17,18) associée à chaque radar à effet Doppler (20,21), elles-mêmes associées à des moyens formant sélecteur (16) de combinaison des signaux de pilotage des premier et second moyens de génération de champ magnétique délivrés par celles-ci.

4. Système selon la revendication 3, **caractérisé en ce que** chaque borne comporte des moyens formant superviseur (19) de fonctionnement de différents organes de celle-ci.

5. Système selon l'une quelconque des revendications précédentes, **caractérisé en ce que** chaque borne est adaptée pour être raccordée à un réseau informatique (30) de raccordement de celle-ci à un centre de surveillance à distance (34,35).

6. Système selon l'une quelconque des revendications précédentes, **caractérisé en ce que** plusieurs bornes (4,5,6) sont implantées le long de la voie (1,2) en amont d'une zone de contrôle de vitesse (3) et sont programmées avec des seuils de vitesse maximale autorisée différents.

7. Système selon l'une quelconque des revendications précédentes, **caractérisé en ce que** les seconds moyens (11) de génération d'un second champ magnétique variable, comprennent des boucles de fréquence.

## Patentansprüche

1. System zur Steuerung des Verkehrs eines öffentlichen Transportfahrzeugs auf einem Gleis, das am Gleis (1. 2) mindestens eine Steuerstation (4, 5, 6) aufweist, mit:
- Mitteln (20) zur Bestimmung der Geschwindigkeit des Fahrzeugs.
- ersten Mitteln (10) zur Erzeugung eines konstanten ersten Magnetfelds.
- zweiten Mitteln (11) zur Erzeugung eines variablen zweiten Magnetfelds. das dazu bestimmt ist, dem ersten Magnetfeld überlagert zu werden und dessen Funktion durch Steuermittel (13, 14. 16. 17, 18) gesteuert wird, die Mittel zum Vergleich der ermittelten Geschwindigkeit des Fahrzeugs mit einem vorgegebenen Geschwindigkeitsschwellenwert umfassen, um das zweite Magnetfeld nur dann zu erzeugen, wenn die Geschwindigkeit des Fahrzeugs kleiner ist als der Schwellenwert, und
- an dem Fahrzeug (7). Mitteln (7a) zur Detektion des Magnetfelds und zur Analyse desselben, um die Funktion der Bremsanlage des Fahrzeugs auszulösen, wenn die Analysemittel in dem Magnetfeld das erste Magnetfeld aber nicht das zweite Magnetfeld erkennen.
**dadurch gekennzeichnet, daß** die ersten Mittel zur Erzeugung des ersten Magnetfelds einen Elektromagneten (10) aufweisen, der Mitteln (12, 16, 17. 18) zur Steuerung seiner Funktion zugeordnet ist, und daß die Mittel zur Bestimmung der Geschwindigkeit des Fahrzeugs ein erstes Doppler-Radar (20) umfassen.

2. System nach Anspruch 1, **dadurch gekennzeichnet, daß** jede Station ein zweites Doppler-Radar (21) zur Detektion des Durchgangs des Fahrzeugs an der Station aufweist, verbunden mit Mitteln (16. 18) zur Auslösung der Erregung des Elektromagneten (10) während einer Zeitspanne, die entsprechend dem vorgegebenen Geschwindigkeitsschwellenwert für die Fahrt des Fahrzeugs an der Station vorbestimmt ist.

3. System nach Anspruch 2. **dadurch gekennzeichnet, daß** Jede Station eine Einheit (17, 18) zur Verarbeitung von Informationen in Verbindung mit jedem Doppler-Radar (20. 21) aufweist, die ihrerseits mit Mitteln verbunden sind, die eine Wähleinrichtung (16) zur Auswahl einer Kombination der von ihnen ausgegebenen Steuersignale für die ersten und zweiten Mittel zur Erzeugung des Magnetfelds bilden.

4. System nach Anspruch 3, **dadurch gekennzeichnet, daß** jede Station Mittel aufweist, die eine Überwachungseinrichtung (19) zur Überwachung der Funktion verschiedener Organe derselben bilden.

5. System nach einem der vorstehenden Ansprüche, **dadurch** gekennezeichnet, daß jede Station dazu ausgebildet ist, an ein Informationsnetz (30) zur Verbindung derselben mit einem Fernüberwachungszentrum (34, 35) angeschlossen zu werden.

6. System nach einem der vorstehenden Ansprüche, **dadurch gekennzeichnet, daß** mehrere Stationen (4, 5. 6) längs des Gleises (1, 2) stromaufwärts einer Zone (3) zur Geschwindigkeitskontrolle eingebaut und mit unterschledlichen Schwellenwerten für die maximal zulässige Geschwindigkeit programmiert sind.

7. System nach einem der vorstehenden Ansprüche, **dadurch gekennzeichnet, daß** die zweiten Mittel (11) zur Erzeugung eines variablen zweiten Magnetfelds Frequenzschleifen umfassen.

## Claims

1. Control system for the movement of a public transport vehicle on a guide track comprising, connected to the track (1, 2), at least one control terminal (4, 5, 6) having:
• means (20) for determining the speed of this vehicle;
• first means (10) for generating a first constant magnetic field;
• second means (11) for generating a second variable magnetic field intended to be superposed on the first field, the operation of which means being controlled by actuation means (13, 14, 16, 17, 18) comprising means for comparing the determined speed of the vehicle to a predetermined speed threshold in order to only generate the second field if the speed of the vehicle is less than the threshold, and
• connected to the vehicle (7), means (7a) for detecting the magnetic field and evaluating this to activate the operation of braking means of the vehicle if, in the field, the evaluation means recognise the first magnetic field and not the second magnetic field,
**characterised in that** the first means for generating the first magnetic field comprise an electromagnet (10) connected to means for controlling its operation (12, 16, 17, 18), and that the means for determining the speed of the vehicle comprise a first Doppler radar unit (20).

2. System according to Claim 1, **characterised in that** each terminal has a second Doppler radar unit (21) for detection of the passage of the vehicle over the terminal, which is connected to means (16, 18) for activating the power supply of the electromagnet (10) during a predetermined period of time in accordance with the predetermined speed threshold for movement of the vehicle over the terminal.

3. System according to Claim 2, **characterised in that** each terminal has a data processing unit (17, 18) connected to each Doppler radar unit (20, 21), and these are themselves connected to selector elements (16) for combining control signals of the first and second means for magnetic field generation supplied by these.

4. System according to Claim 3, **characterised in that** each terminal has elements (19) for monitoring the operation of different elements thereof.

5. System according to any one of the preceding claims, **characterised in that** each terminal is adapted to be connected to a computer network (30) for connection to a remote monitoring centre (34, 35).

6. System according to any one of the preceding claims, **characterised in that** several terminals (4, 5, 6) are installed along the track (1, 2) upline from a speed control zone (3) and are programmed with different thresholds for maximum authorised speed.

7. System according to any one of the preceding claims, **characterised in that** the second means (11) for generating a second variable magnetic field comprise frequency loops.
